# EUROPÄISCHE PATENTANMELDUNG

(11) **EP 0 546 463 A1**
(43) Veröffentlichungstag der Anmeldung: **16.06.1993**
(21) Anmeldenummer: 92120701.5
(22) Anmeldetag: 04.12.1992
(51) Int. Cl.: B01L 11/00, G01N 35/06

(54) **Verfahren und Vorrichtung zum Reinigen von Pipettenspitzen**

(30) Priorität: 12.12.1991 CH 3654/91
(71) Anmelder: Hamilton Bonaduz AG, CH-7402 Bonaduz (CH)
(72) Erfinder: Panzer, Armin, CH-7014 Trin-Dorf (CH); Rusch, Peter, CH-7402 Bonaduz (CH); Leuthold, Rudolf, CH-7403 Rhäzüns (CH)
(74) Vertreter: Blum, Rudolf Emil Ernst

(57) **Zusammenfassung**

Bei dem Verfahren wird Wasserdampf zur Reinigung der Pipettierspitzeninnenseite zwischen den Dosierungen benutzt. Dabei strömt der unter hohem Druck stehende Wasserdampf durch die mit Probenmaterial oder Reagenzien in Berührung gekommene Pipettenspitze (19) mit hoher Geschwindigkeit aus und reinigt auf diese Weise die Pipettenspitzeninnenseite von Proben oder Reagenzrückständen.

Mit diesem Verfahren kann die gegenseitige Kontamination verschiedener Proben oder Reagenzien auf einem automatischen Analyse- oder Probenpipettiergerät vermieden werden.

## Beschreibung

Die vorliegende Erfindung betrifft ein Verfahren zum Reinigen von Pipettenspitzen in einer automatischen Einrichtung zur Analyse oder Pipettierung sowie eine Vorrichtung zur Durchführung des Verfahrens.

Automatische chemische Analysegeräte ermöglichen eine rasche Messung verschiedener Probenbestandteile. Ein solches Analysegerät wird gewöhnlich als Analysator für Mehrfachbestimmungen bezeichnet. Bei einem solchen Analysator müssen mehrere Arten von Reagenzien sowie verschiedene Proben unter Vermeidung gegenseitiger Kontamination dosiert werden.

Bei den bekannten Analysegeräten für Mehrfachbestimmungen und bei automatischen Probenpipettiervorrichtungen werden die Reagenz- und Probenpipetten in der zwischen aufeinanderfolgenden Abgaben liegender Zeit periodisch gespült. Die Innenwand der Reagenz- und Probenpipetten werden abgewaschen, indem destilliertes Wasser oder ein Reinigungsmittel durch die Pipetten hindurchgeleitet wird und ihre Aussenwand dadurch, dass die vorderen Enden in eine Spüllösung eingetaucht werden. Ein solcher Spülvorgang ist zeitraubend und beschränkt somit die Analysiergeschwindigkeit. Dazu benötigt er eine grosse Menge Wasser oder Reinigungsmittel und verursacht somit hohe Analysatorbetriebskosten.

Eine andere Möglichkeit zur Verhinderung der gegenseitigen Kontamination besteht in der Verwendung einer entfernbaren Pipettenspitze. Bei der Pipettierung von Proben oder Reagenz werden die Flüssigkeiten nur so weit in der Pipettierspitze angesaugt, dass nur die entfernbaren Spitzen mit der Probe oder Reagenz in Berührung kommen. In den zwischen aufeinanderfolgenden Abgaben liegenden Zeitperioden werden die Pipettenspitzen in einer Pipettenauswerfvorrichtung entfernt und durch neue ersetzt. Dadurch lässt sich eine Kontamination verschiedener Proben oder Reagenzien vollständig verhindern. Dieses Verfahren verlangt jedoch eine komplizierte Konstruktion und bewirkt eine starke Erhöhung der Betriebskosten. Dadurch dass für jede Pipettierung eine neue Pipettenspitze verwendet wird, ergibt sich eine grosse Menge in Abfall, was die Umwelt in starkem Masse belastet.

Hier will die Erfindung Abhilfe schaffen. Die Erfindung, wie sie in den Ansprüchen gekennzeichnet ist, löst die Aufgabe, ein Verfahren und eine Vorrichtung zum Reinigen von Pipettenspitzen zu schaffen, bei denen zum Reinigen Wasserdampf im Innenraum der Pipettenspitze erzeugt und mit hoher Geschwindigkeit ausgestossen wird, womit an der Innenwand verbleibende Rückstände von Proben und Reagenzien ausgespült werden.

Die Vorteile der Erfindung sind im wesentlichen darin zu sehen, dass bei einer besseren Reinigungswirkung im Vergleich zu herkömmlichen Spülverfahren weniger Spülflüssigkeit verbraucht und gleichzeitig die betriebliche Leistungsfähigkeit der Einrichtung wesentlich erhöht wird.

Im folgenden wird die Erfindung anhand der beiliegenden Zeichnungen erläutert.

Es zeigen:
Figur 1 eine räumliche Ansicht eines Teils eines automatischen Analysegerätes, und
Figur 2 eine Seitenansicht eines Ausführungsbeispiels einer Pipettenspitze.

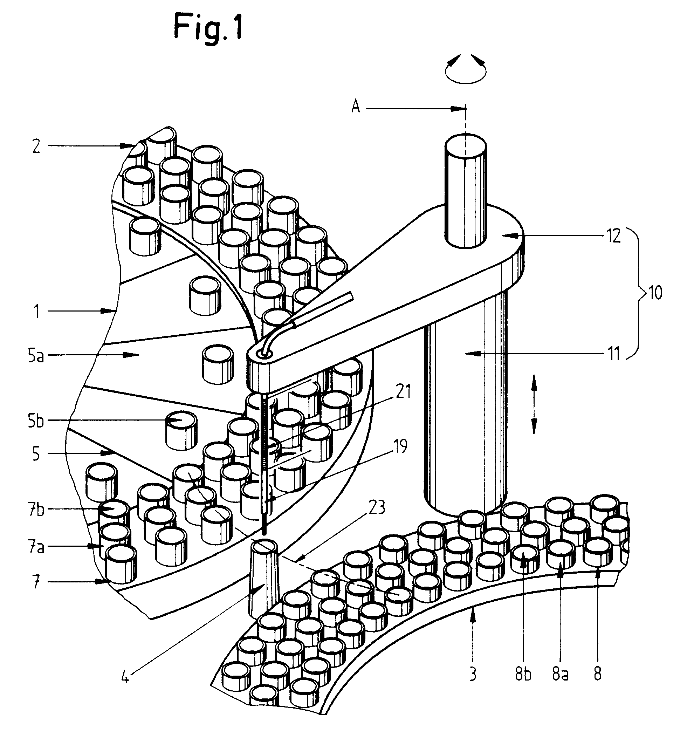

Das in Figur 1 dargestellte Gerät hat einen Reagenzrotor 1, einen Probenrotor 2, und einen Reaktionsrotor 3, wobei der Reagenzrotor und der Probenrotor konzentrisch zueinander angeordnet sind, so dass sie einen Doppelrotor bilden, dessen Rotoren jedoch unabhängig voneinander drehbar sind. Zwischen dem Doppelrotor 1, 2 und dem Reaktionsrotor 3 befindet sich ein Wasch-Dampfgefäss 4.

Jeder Rotor hat Aufnahmen für Gefässe. Der Reagenzrotor 1 hat vorzugsweise grosse Aufnahmen 5 für eine kleine Zahl von Reagenzgefässen 5a mit Oeffnungen 5b.

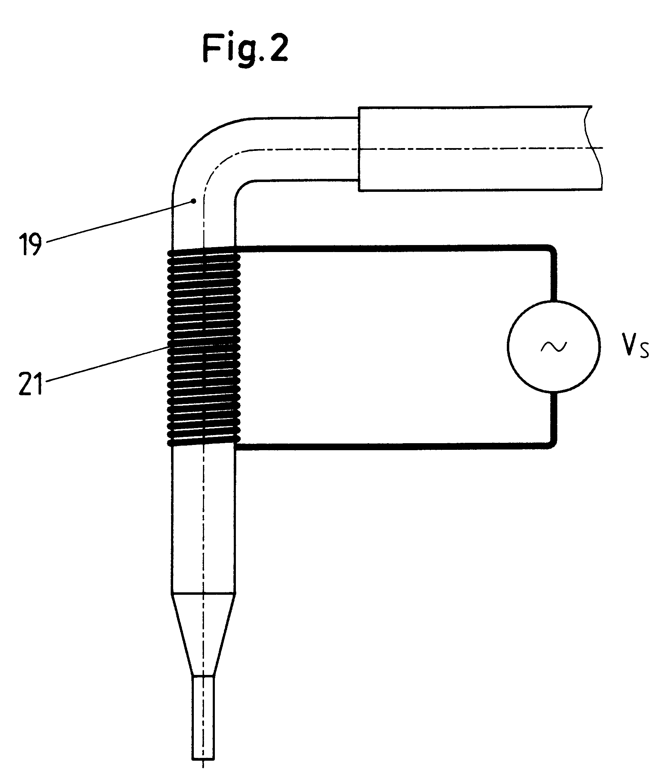

Der Probenrotor 2 hat zweckmässigerweise kreisrunde Aufnahmen 7 für die Probengefässe, welche im dargestellten Fall auf drei konzentrischen Kreisen angeordnet sind. Sie dienen zur Aufnahme von Probengefässen 7a mit Oeffnungen 7b. Auch die Aufnahme 8 für die Reaktionsgefässe 8a mit Oeffnungen 8b sind zweckmässigerweise kreisrund und in mehreren Reihen angeordnet. Im Bereich zwischen den Rotoren befindet sich eine insgesamt mit 10 bezeichnete Proben- und Reagenzpipettiervorrichtung. Sie besteht in der hier dargestellten Ausführung im wesentlichen aus einer Säule 11 und einem Schwenkarm 12. Im vorderen Ende des Schwenkarms ist die Proben- und Reagenzdosierspitze befestigt, welche vorzugsweise aus einer Stahlnadel 19 besteht und über einen flexiblen Schlauch mit der Dosiereinheit, welche bevorzugt aus einer mit Schrittmotoren angetriebenen Spritzendosiereinheit besteht, verbunden. Die Spritzendosiereinheit ist in der Figur der Uebersichtlichkeit halber nicht dargestellt. Auf der Dosierspitze ist eine Induktionsspule 21 so angebracht, dass das maximal zu dosierende Proben- und Reagenzvolumen nicht bis zur Höhe der Induktionsspule gelangt. Eine an der Induktionsspule angelegte Wechselspannung (Vs), die dazu notwendige Elektronik wird in der Figur 2 der Uebersichtlichkeit halber weggelassen, bewirkt eine Erwärmung der Flüssigkeit in der Nadel, welche bei genügend hoher Spannung zu verdampfen beginnt.

Die Schwenkachse A der Pipettiervorrichtung verläuft parallel zu den Drehachsen der Rotoren 1,2,3 und damit senkrecht zur Arbeitsebene des Gerätes, die durch die Rotoren definiert sind. Die Nadel 19 bewegt sich auf dem Schwenkkreis 23, auf welchem auch die Dampf- und Waschstation 4 liegt. Ein weiterer Antrieb, welcher der Uebersichtlichkeit halber nicht dargestellt ist, ermöglicht das notwendige Anheben und Absenken der Säule 11 und damit auch der Dosiernadel.

Die Rotoren 1, 2, 3 sind jeweils in eine Vielzahl von Drehpositionen drehbar, in denen sich mindestens eine der Oeffnungen 5b, 7b, 8b der Gefässe 5a, 7a, 8a in einer Position befindet, die auf dem Schwenkkreis 23 der Dosiernadel liegt. Die Dosiernadel kann in die jeweilige Oeffnung abgesenkt werden, um Flüssigkeit aufzunehmen oder abzugeben.

Die Funktionsweise des erfindungsgemässen Verfahrens wird im folgenden anhand von Proben und Reagenzpipettierungen aus dem Proben- bzw. Reagenzrotor in Reaktionsgefässe auf dem Reaktionsrotor dargstellt.

Entsprechend der Zahl der durchzuführenden Pipettierungen werden die Reaktionsgefässe in die Aufnahme des Reaktionsrotors 3 gestellt. Danach wird mit Hilfe der Dosiernadel aus der Position 5b Reagenz und aus einem der Probengefässe, welche auf dem Schwenkkreis 23 liegen, Probe durch die Dosiereinheit angesogen. Reagenz und Probe werden anschliessend gemeinsam in ein ebenfalls auf dem Schwenkkreis liegendes Reaktionsgefäss abgegeben. Danach wird die Dosiernadel über die Dampf-Waschstation gedreht und in die sich dort befindende Flüssigkeit eingetaucht. Darauf wird eine Wechselspannung an die Induktionsspule angelegt und die sich unter der Induktionsspule in der Dosierspitze befindende Flüssigkeit dadurch zum Verdampfen gebracht. Dies geschieht so rasch, dass der Dampf mit hoher Geschwindigkeit aus der Nadelöffnung der Dosiernadel entweicht und dadurch die Dosiernadelinnenseite von Rückständen der vorangegangenen Pipettierung reinigt. Der austretende Dampf kondensiert in der Flüssigkeit der Dampf- und Waschstation und wird abgesogen. Anschliessend wird die Nadel abgespült und wieder auf Umgebungstemperatur abgekühlt, worauf die nächste Dosierung erfolgen kann.

## Patentansprüche

1. Verfahren zum Reinigen von Pipettenspitzen in einer automatischen Einrichtung zur Analyse und Pipettierung, dadurch gekennzeichnet, dass die Pipettenspitze zwischen zwei aufeinanderfolgenden Dosiervorgängen mit Dampf gespült wird, um die gegenseitige Kontamination verschiedener Proben oder Reagenzien mit derselben Pipettenspitze zu verhindern.

2. Verfahren nach Anspruch 1, dadurch gekennzeichnet, dass der Dampf innerhalb der Pipettenspitze erzeugt wird.

3. Verfahren nach Anspruch 1, dadurch gekennzeichnet, dass der Dampf über eine Leitung in die Pipettenspitze eingeleitet wird.

4. Verfahren nach einem der Ansprüche 1 bis 3, dadurch gekennzeichnet, dass der Dampf in eine geschlossene Pipettenspitze eingeleitet wird, wobei die Mündung der Pipettenspitze bei Erreichen eines vorbestimmten Druckwertes freigegeben wird, um die Pipettenspitze durch den ausströmenden Dampf zu reinigen.

5. Verfahren nach Anspruch 4, dadurch gekennzeichnet, dass die Pipettenspitze in einen mit Flüssigkeit gefüllten Behälter eingeführt wird, um den ausströmenden Dampf zu kondensieren.

6. Verfahren nach Anspruch 4, dadurch gekennzeichnet, dass die Pipettenspitze mit der Oeffnung unter Druckanwendung auf einen elastischen Körper aufgelegt wird.

7. Vorrichtung zur Durchführung des Verfahrens nach Anspruch 1, wobei die automatische Einrichtung eine erste Aufnahmeeinrichtung (2) mit einer Mehrzahl von ersten Gefässen (7a) versehbar ist, mindestens eine zweite Aufnahmeeinrichtung (3), die mit einer Mehrzahl von zweiten Gefässen (8a) versehbar ist, und eine Dosiervorrichtung (10) mit einer Pipettenspitze (19) aufweist, um das Medium im ersten Gefäss in das zweite Gefäss oder umgekehrt zu übertragen, dadurch gekennzeichnet, dass eine Einrichtung (21) zur Dampferzeugung vorgesehen ist, die mit der Pipettenspitze verbunden und durch eine Steuereinrichtung steuerbar ist, und dass zwischen der ersten und zweiten Aufnahmeeinrichtung (2,3) eine Station (4) angeordnet ist, um den aus der Pipettenspitze austretenden Dampf zu kondensieren.

8. Vorrichtung nach Anspruch 7, dadurch gekennzeichnet, dass die Pipettenspitze über einen Schlauch mit der Dampferzeugungseinrichtung verbunden ist.

9. Vorrichtung nach Anspruch 7, dadurch gekennzeichnet, dass die Dampferzeugungseinrichtung (21) auf der Pipettenspitze (19) angeordnet ist.

10. Vorrichtung nach Anspruch 7, dadurch gekennzeichnet, dass die Station ein mit Flüssigkeit gefüllter Behälter (4) ist, in welchen die Pipettenspitze (19) eintauchbar ist.

11. Vorrichtung nach Anspruch 7, dadurch gekennzeichnet, dass eine Verstelleinrichtung (10) vorgesehen ist, um die Pipettenspitze (19) einerseits zwischen den Aufnahmeeinrichtungen (2,3) und der Station (4) und andererseits in und aus dem Gefäss und die Station zu bewegen.

12. Vorrichtung nach Anspruch 9, dadurch gekennzeichnet, dass die Pipettenspitze (19) aus Metall besteht und dass die Dampferzeugungseinrichtung eine Induktionsspule ist, die aus der Steuervorrichtung gespeist wird.

13. Vorrichtung nach Anspruch 9, dadurch gekennzeichnet, dass die Pipettenspitze (19) aus hitzebeständigem Material besteht und dass die Dampferzeugungseinrichtung eine Heizwicklung ist, die aus der Steuereinrichtung gespeist wird.
